# EUROPEAN PATENT APPLICATION

(11) **EP 4 521 574 A1**
(43) Date of publication of application: **12.03.2025**
(21) Application number: 23196074.1
(22) Date of filing: 07.09.2023
(51) Int. Cl.: H02G 15/14

(54) **DC POWER CABLE SYSTEM**

(71) Applicant: NKT HV Cables AB, 371 60 Lyckeby (SE)
(72) Inventor: GUSTAFSSON, Kristian, Karlskrona (SE)
(74) Representative: Kransell & Wennborg KB

(57) **Abstract**

The present disclosure relates to a DC power cable system comprising: a power cable (1) comprising a conductor (14), an insulation system (16) surrounding the conductor (14), an optical fiber cable (10) extending along the insulation system (16); a power cable accessory (2), wherein the conductor (14) is connected to the power cable accessory (2), a sensor (20) arranged in the power cable accessory (2), a power supply lead (12) extending along the insulation system (16), and a signal communication device (22) powered via the power supply lead (12) and connected to the optical fiber cable (10), wherein the signal communication device (22) is arranged to receive an electrical signal from the sensor (20), convert the electrical signal to an optical signal, and transmit the optical signal through the optical fiber cable (10).

## Description

### TECHNICAL FIELD

The present disclosure relates generally to a DC power cable system.

### BACKGROUND

Power cables are used to transport electricity over long distances on land and also underwater.

To monitor the condition of the power cable, a power cable may be provided with a sensor configured to measure a cable parameter indicative of a fault of the power cable. To obtain accurate sensor readings, it is desirable to place the sensor as close as possible to the part of the power cable from which the sensor is configured to collect measurements. However, when the sensor is placed on certain parts of the power cable, difficulties arise regarding how the sensor signal should be collected and how the sensor should be powered.

It is therefore an object of the present disclosure to provide a DC power cable with an improved monitoring system.

### SUMMARY

For AC power cables, which in contrast to DC power cables generate varying magnetic fields, electronic equipment in the cable, such as sensors, may be powered by harvesting energy from the magnetic fields by e.g., coils. However, as this solution is not applicable in DC power cables systems, aspects of the present disclosure aim at providing a DC power cable system that solves or at least mitigates the problems of the prior art.

There is hence provided a DC power cable system comprising: a power cable comprising a conductor, an insulation system surrounding the conductor, an optical fiber cable extending along the insulation system, a power cable accessory, wherein the conductor is connected to the power cable accessory, a sensor arranged in the power cable accessory, a power supply lead extending along the insulation system, and a signal communication device powered via the power supply lead and connected to the optical fiber cable, wherein the signal communication device is arranged to receive an electrical signal from the sensor, convert the electrical signal to an optical signal, and transmit the optical signal through the optical fiber cable.

By including a power supply lead and a signal communication device in the power cable accessory, the sensor may be placed on any desired part of the power cable accessory. Furthermore, because the signal communication device receives power via the power supply lead, the signal communication device can be operated inside a power cable accessory at any location along the power cable system, for example underwater far from the end points of the power cable system, even though the power cable system is of DC type for which it is not possible to utilize an AC field generated by the power cable system to power the signal communication device.

According to one embodiment, the sensor may be one of a temperature sensor, pressure sensor, partial discharge sensor, moisture sensor and/or gas detector.

According to one embodiment, the insulation system comprises an inner semiconducting layer, an insulation layer arranged around the inner semiconducting layer, and an outer semiconducting layer arranged around the insulation layer.

According to one embodiment, the power cable system comprises an armor layer arranged around the insulation system, and wherein at least one of the power supply lead and the optical fiber cable is arranged in the armor layer.

According to one example both the optical fiber cable and the power supply lead is arranged in the armor layer.

The power supply lead may have an outer diameter equal to or smaller than the diameter of the armor wires. The optical fiber cable may have an outer diameter equal to or smaller than the diameter of the armor wires. The power supply lead and/or optical fiber cable may in the circumferential direction of the power cable be arranged between two armor wires of the armor layer.

According to one embodiment, the power cable is a HVDC power cable, and the power supply lead is a low voltage power supply lead.

Low voltage is herein a factor of at least 10 lower than the voltage rating of the power cable. For example, low voltage may mean 110, 115, 110, 220, 230, or 240 VAC.

According to one embodiment, the power cable accessory is a joint or a cable termination.

Placing a sensor at a joint or cable termination may be especially desirable since these parts may experience failures due to being subjected to, for example, wear due to overbending, heat and/or ageing.

According to one embodiment, the power cable accessory comprises a connector and the conductor has a conductor end attached to the connector, wherein the sensor is arranged in or on the connector.

The connector may be in direct contact with the conductor of the power cable and is heated by the current flowing through the conductor. By arranging the sensor in or on the connector and performing measurements thereon, the sensed parameters, such as temperature, will produce a better estimate of the actual conductor dynamics.

According to one embodiment, the DC power cable system further comprises a power converter, wherein the power supply lead is connected to the power converter, and the power converter is configured to power the signal communication device.

According to one embodiment, the signal communication device is arranged in the power cable accessory.

According to one embodiment, the sensor is configured to wirelessly communicate the electrical signal to the signal communication device, and the signal communication device is configured to wirelessly receive the electrical signal from the sensor.

By this feature, there is no need for a wired connection between the sensor and the signal communication device for the electrical signal to be transmitted from the sensor to the signal communication device.

According to one embodiment, the power cable is a submarine power cable.

Monitoring of power cable parts may be especially desirable in submarine power cables since they may be subjected to harsher environments which may wear on the power cable.

According to one embodiment, the optical fiber cable is arranged to transmit the optical signal from the signal communication device in the submarine power cable system to an onshore monitoring arrangement.

In one embodiment, the signal communication device is arranged to include metadata, such as location, in the optical signal.

By including metadata localization of the fault may be facilitated.

### BRIEF DESCRIPTION OF THE DRAWINGS

Aspects and embodiments are now described, by way of example, with reference to the accompanying drawings, in which:
figure 1 schematically shows a cross section of an example of a power cable; and
figure 2 schematically shows a longitudinal sectional view of a power cable comprising a power cable accessory according to an exemplifying embodiment.

### DETAILED DESCRIPTION

The aspects of the present disclosure will now be described more fully hereinafter with reference to the accompanying drawings, in which certain embodiments of the invention are shown.

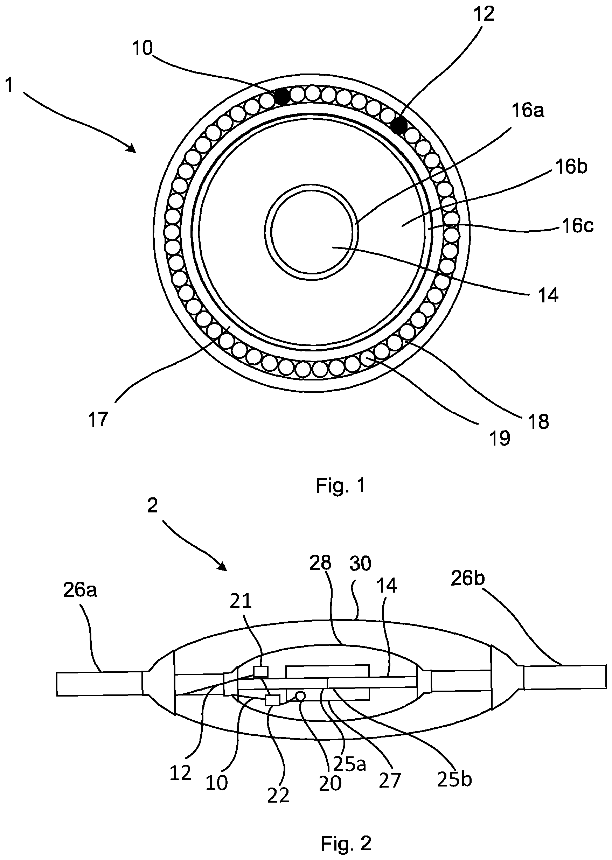

Fig. 1 schematically shows a cross section of an example of a power cable 1. The power cable 1 is a DC power cable. The power cable 1 may for example be an HVDC power cable with a voltage rating below 400 kV (E_{average}<20 kV/mm), or a UHVDC power cable with a voltage rating above 400 kV (E_{average}>20 kV/mm).

The power cable 1 may be a static or a dynamic submarine power cable, or alternatively an underground power cable.

The power cable 1 forms part of a DC power cable system including the power cable 1, a power cable accessory 2, a sensor 20, and signal communication device 22, shown in Fig. 2.

The power cable 1 comprises a conductor 14. The conductor 14 may for example be solid, stranded, profiled, or of Milliken type.

The power cable 1 may comprise an insulation system 16 surrounding the conductor 14. The insulation system 16 may comprise an inner semiconducting layer 16a, an insulation layer 16b arranged around the inner semiconducting layer 16a, and an outer semiconducting layer 16c arranged around the insulation layer 16b.

The inner semiconducting layer 16a may for example comprise crosslinked 25 polyethylene (XLPE), polypropylene (PP), thermoplastic elastomer (TPE) which is based on PP random copolymer, ethylene propylene diene monomer (EPDM) rubber, or ethylene propylene rubber (EPR), mixed with a semiconductive component such as carbon black to form a semiconducting polymer, or a semiconducting paper. The insulation layer 16b may for example comprise XLPE, PP, thermoplastic elastomer (TPE) which is based on PP random copolymer, EPDM rubber, or EPR, or paper. The outer semiconducting layer 16c may for example comprise XLPE, PP, thermoplastic elastomer (TPE) which is based on PP random copolymer, EPDM rubber, or EPR, mixed with a semiconductive component such as carbon black to form a semiconducting polymer, or a semiconducting paper.

The power cable 1 may comprise an armor layer 18 arranged around the insulation system 16. The armor layer 18 may comprise a plurality of armor wires 19 extending helically along the power cable 1. The armor wires 19 may be made of metal such as galvanized carbon steel, austenitic stainless steel, copper, aluminum, or synthetic material such as jacketed aramid fibers.

In addition, the power cable 1 may comprise at least one layer, such as layer 17, between the armor layer 18 and the insulation system 16. The layer 17 may for example be a polymeric layer. There may be other layers too between the armor layer 18 and the insulation system 16, such as a radial water barrier layer and/or a bedding layer.

The power cable 1 comprises an optical fiber cable 10 extending along the insulation system 16 of the power cable 1. The optical fiber cable 10 may for example be arranged in the armor layer 18 or if the power cable 1 is a three-core DC power cable comprising filler profiles, the optical fiber cable 10 may be arranged in one of the filler profiles. According to one example, the optical fiber cable 10 may be arranged in the layer 17. The optical fiber cable 10, or a tube for the optical fiber cable 10, may for example be provided in the layer 17 in conjunction with the extrusion process of the layer 17.

The optical fiber cable 10 comprises a plurality of optical fibers. The optical fiber cable 10 may comprise a tube containing the optical fibers. The optical fiber cable 10 may for example be a Fiber In Metallic Tube (FIMT). The optical fibers may be of single mode, multimode graded index, or multimode step-index type.

The power cable 1 comprises a power supply lead 12 extending along the insulation system 16 of the power cable 1. The power supply lead 12 may for example be arranged in the armor layer 18 or if the power cable 1 is a three-core DC power cable comprising filler profiles, the power supply lead 12 may be arranged in one of the filler profiles. According to one example, the power supply lead 12 may be arranged in the layer 17. The power supply lead 12, or a tube for the power supply lead 12, may for example be provided in the layer 17 in conjunction with the extrusion process of the layer 17.

The power supply lead 12 may be a low voltage power supply lead arranged to provide power to the signal communication device 22. The power supply lead 12 may have a dry, semi dry, or wet design.

The power supply lead 12 may be arranged to transmit single phase AC power, or DC electric power.

The power supply lead 12 may include a protective tube having one or more insulated electrical power wires arranged therein.

According to one example, the optical fiber cable 10 and the power supply lead 12 may be arranged as a composite cable, wherein the optical fibers and electrical power wires are disposed in the same tube.

Figure 2 schematically shows a longitudinal sectional view of the DC power cable system including the power cable 1 and the power cable accessory 2. The power cable accessory 2 is according to the example a joint. The power cable accessory 2 may for example be a rigid sea joint. The joint may be a single or multiterminal joint. The power cable 1 comprises two power cable sections 26a, 26b, connected to each other by the power cable accessory 2. The DC power cable system may comprise a plurality of power cable accessories 2, for example in the form of a plurality of joints and/or cable terminations.

The power cable accessory 2 may comprise an outer rigid casing 30, which has openings 24a and 24b at a respective axial end. The power cable accessory 2 may have an inner casing 28, in which the electric joint between the two power cable sections 26a and 26b is located.

Each power cable section 26a, 26b enters through a respective opening of the outer rigid casing 30. Inside the outer rigid casing 30, any armor layer 18 has been removed. The armor wires 19 of the armor layer 18 are connected to the outer rigid casing 30, for example by welding or by clamping. Each power cable section 26a, 26b then enters the inner casing 28 through a respective opening of the inner casing 28. The power cable accessory 2 comprises a connector 27. The connector 27 joins a conductor end 25a of the conductor 14 of the first power cable section 26a with a conductor end 25b of the conductor 14 of the second power cable section 26b. The jointing may for example be done means of screws or by clamping while both conductor ends 25 are arranged inside the connector 27.

The outer rigid casing 30 may be filled with a material such as water or sand for added weight. The inner casing 28 is watertight.

The DC power cable system may further comprise a sensor 20. The sensor 20 may be arranged in the power cable accessory 2. The sensor 20 may for example be arranged in or on the connector 27. The sensor 20 is arranged to collect measurement data in the form of an electrical signal, the electrical signal being indicative of parameters such as temperature, pressure, partial discharge, moisture and/or gas.

The DC power cable system comprises a signal communication device 22. The signal communication device 22 may be arranged in the power cable accessory 2. The signal communication device 22 is powered via the power supply lead 12 and connected to an optical fiber cable 10.

The sensor 20 may be arranged to wirelessly communicate the electrical signal to the signal communication device 22, and the signal communication device 22 is configured to wirelessly receive the electrical signal from the sensor 20. Alternatively, the electrical signal may be communicated from the sensor 20 to the signal communication device 22 by a wired communication connecting the sensor 20 to the signal communication device 22.

The signal communication device 22 is configured to convert the electrical signal by the sensor 20 to an optical signal to be transmitted by the optical fiber cable 10. The optical fiber cable 10 is connected to the signal communication device 22, and is configured to receive the optical signal from the signal communication device 22. The optical fiber cable 10 may be arranged to transmit the optical signal in an axial direction along the length of the power cable 1 to a monitoring system and/or to a communications network (not shown). The optical signal transmitted by the signal communication device 22 may include metadata, such as a location of the sensor 20.

The DC power cable system may comprise a power converter 21 configured to convert the power transmitted through the power supply lead 12 to adapt the voltage/current level and/or converting AC power to DC power to that required by the signal communication device 22. The power converter 21 may be integrated with the signal communication device 22, or it may be a separate entity. The power supply lead 10 may in this case be connected to the power converter 21, which is connected to the signal communication device 22. Alternatively, the power supply lead 10 may be connected directly to the signal communication device 22.

The sensor 20 may be passive or comprise electronics requiring power to operate. In the latter case, the power supply 21 maybe arranged to power the sensor 20. Alternatively, the sensor 20 may be powered directly from the power supply lead 10 via a connection plate or similar means, to which the signal communication device 22 may also be connected.

The power supply lead 12 and optical fiber cable 10 may be connected to a plurality of sensors 20 and signal communication devices 22, respectively, arranged at different locations along the DC power cable system, e.g., in different power cable accessories.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

## Claims

1. A DC power cable system comprising:
a power cable (1) comprising
a conductor (14),
an insulation system (16) surrounding the conductor (14), and
an optical fiber cable (10) extending along the insulation system (16);
a power cable accessory (2), wherein the conductor (14) is connected to the power cable accessory (2),
a sensor (20) arranged in the power cable accessory (2),
a power supply lead (12) extending along the insulation system (16), and
a signal communication device (22) powered via the power supply lead (12) and connected to the optical fiber cable (10), wherein the signal communication device (22) is arranged to receive an electrical signal from the sensor (20), convert the electrical signal to an optical signal, and transmit the optical signal through the optical fiber cable (10).

2. The DC power cable system according to claim 1, wherein the sensor (20) may be one of a temperature sensor, pressure sensor, partial discharge sensor, moisture sensor and/or gas detector.

3. The DC power cable system according to any one of the preceding claims, wherein the insulation system (16) comprises an inner semiconducting layer (16a), an insulation layer (16b) arranged around the inner semiconducting layer (16a), and an outer semiconducting layer (16c) arranged around the insulation layer (16b).

4. The DC power cable system according to any one of the preceding claims, wherein the power cable system comprises an armor layer (18) arranged around the insulation system (16), and wherein at least one of the power supply lead (12) and the optical fiber cable (10) is arranged in the armor layer (18).

5. The DC power cable system according to any one of the preceding claims, wherein the power cable (1) is a HVDC power cable (1), and the power supply lead (12) is a low voltage power supply lead (12).

6. The DC power cable system according to any one of the preceding claims, wherein the power cable accessory (2) is a joint or a cable termination.

7. The DC power cable system according to any one of the preceding claims, wherein the power cable accessory (2) comprises a connector (27) and the conductor (14) has a conductor end (25a, 25b) attached to the connector (27), wherein the sensor (20) is arranged in or on the connector (27).

8. The DC power cable system according to any one of the preceding claims, further comprising a power converter (21), wherein the power supply lead (12) is connected to the power converter (21), and the power converter (21) is configured to power the signal communication device (22).

9. The DC power cable system according to any one of the preceding claims, wherein signal communication device (22) is arranged in the power cable accessory (2).

10. The DC power cable system according to any one of the preceding claims, wherein the sensor (20) is configured to wirelessly communicate the electrical signal to the signal communication device (22), and the signal communication device (22) is configured to wirelessly receive the electrical signal from the sensor (20).

11. The DC power cable system according to any one of the preceding claims, wherein the power cable (1) is a submarine power cable.

12. The DC power cable system according to claim 11, wherein the optical fiber cable (10) is arranged to transmit the optical signal from the signal communication device (22) in the submarine power cable system to an onshore monitoring arrangement.

13. The DC power cable system according to any one of the preceding claims, wherein the signal communication device (22) is arranged to include metadata, such as location, in the optical signal.
